# EUROPEAN PATENT APPLICATION

(11) **EP 3 819 828 A1**
(43) Date of publication of application: **12.05.2021**
(21) Application number: 19831144.1
(22) Date of filing: 02.07.2019
(51) Int. Cl.: G06N 20/00

(54) **MACHINE LEARNING PROCESS IMPLEMENTATION METHOD AND APPARATUS, DEVICE, AND STORAGE MEDIUM**

(30) Priority: 05.07.2018 CN 201810730414
(71) Applicant: The Fourth Paradigm (Beijing) Tech Co Ltd, Beijing 100085 (CN)
(72) Inventor: HUANG, Yingning, Beijing 100085 (CN); CHEN, Yuqiang, Beijing 100085 (CN); HU, Shiwei, Beijing 100085 (CN); DAI, Wenyuan, Beijing 100085 (CN)
(74) Representative: Zimmermann, Tankred Klaus
(86) International application number: PCT/CN2019/094363
(87) International publication number: WO 2020/007287

(57) **Abstract**

A machine learning process implementation method and apparatus, a device, and a storage medium. The method comprises: acquiring data (S110); acquiring an annotation result of the data (S120); and selecting a model framework matching a requirement of a user and/or a model matching a predicted goal of the user, and, on the basis of the selected model framework and/or the selected mode, using the data and the annotation result thereof to perform model training (S130), wherein the model framework is used to perform model training on the basis of a machine learning algorithm. In this way, a machine learning process can be implemented at a lower level such that the user is not required to have algorithm knowledge.

## Description

### FIELD

The present disclosure generally relates to the field of machine learning, and more specifically, to a method, device, device, and storage medium for performing a machine learning process.

### BACKGROUND

Machine learning (including deep learning) is an inevitable product of the development of artificial intelligence research to a certain level. The machine learning is committed to improving the performance of the system through computational means and using experience. In computer systems, "experience" is usually in the form of "data". Through machine learning algorithms, "models" can be generated from data. That is, by providing empirical data to machine learning algorithms, the model can be generated based on the empirical data. When faced with a new instance, the model may provide corresponding determination, that is, predicted results.

At present, when training machine learning models, relevant operators are required to know machine learning technology. For this reason, algorithm teams are usually set up such that the labor cost is relatively large.

### SUMMARY

Example embodiments of the disclosure provide a method, an apparatus, and a device for performing machine learning processing, and a storage medium to solve at least one problem.

According to a first aspect of the disclosure, a method for performing machine learning processing is provided. The method includes obtaining data; obtaining a labelling result of the data; and selecting a model framework meeting a requirement of a user and/or a model meeting a predicted target of the user, and performing model training using the data and the labelling result of the data based on the model framework and/or the model, in which the model framework is a framework used for performing the model training based on a machine learning algorithm.

According to a second aspect of the disclosure, an apparatus for performing machine learning process is provided. The apparatus includes a data obtaining module, configured to obtain data; a labelling result obtaining module, configured to obtain a labelling result; a selecting module, configured to select a model framework meeting a requirement of a user and/or a model meeting a predicted target of the user, in which the model framework is a framework used for performing model training based on a machine learning algorithm; and a training module, configured to perform the model training using the data and the labelling result of the data based on the model framework and/or the model.

According to a third aspect of the disclosure, a computing device is provided. The computing device includes a processor and a memory. The memory has executable codes stored thereon. When the executable codes are executed by the processor, the processor is caused to perform the method according to the first aspect of the disclosure.

According to a fourth aspect of the disclosure, a non-transitory machine-readable storage medium is provided. The storage medium has executable codes stored thereon. When the executable codes are executed by a processor of an electronic device, the processor is caused to perform a method according to the first aspect of the disclosure.

Based on the disclosure, the model framework and/or the model may be automatically selected to perform the model training, such that the difficulty of the machine learning process may be reduced to a level without requiring the user to know the algorithm.

### BRIEF DESCRIPTION OF THE DRAWINGS

The above and other objects and features of example embodiments of the present disclosure will become clear through the following description in conjunction with the accompanying drawings exemplarily showing the embodiments, in which:
FIG. 1 is a flowchart illustrating a method for performing machine learning process according to example embodiments of the disclosure.
FIG. 2 is a flowchart illustrating a method for obtaining data according to example embodiments of the disclosure.
FIG. 3 is a flowchart illustrating a method for assisting labelling according to example embodiments of the disclosure.
FIG. 4 is a schematic diagram illustrating a labelling interface according to example embodiments of the disclosure.
FIG. 5 is a schematic diagram illustrating an interface after generating a model.
FIG. 6 is a flowchart illustrating a method for model interpretation according to example embodiments of the disclosure.
FIG. 7 is a schematic diagram illustrating a model training process according to example embodiments of the disclosure.
FIG. 8 is a schematic diagram illustrating a platform architecture of a full-process automatic learning platform according to the disclosure.
FIG. 9 is a block diagram illustrating an apparatus for performing machine learning process according to example embodiments of the disclosure.
FIG. 10 is a block diagram illustrating functional modules of a data obtaining module.
FIG. 11 is a block diagram illustrating functional modules of a labelling result obtaining module.
FIG. 12 is a block diagram illustrating functional modules of an interpreting module.
FIG. 13 is a schematic diagram illustrating a computing device for implementing a method for processing data according to embodiments of the disclosure.

### DETAILED DESCRIPTION

Reference will now be made in detail to embodiments of the disclosure. Examples of embodiments are provided in the drawings, in which the same reference numerals refer to the same components throughout the disclosure. Embodiments will be described below by referring to the drawings to explain the disclosure. It should be noted, the term "and/or" in the disclosure means including three parallel cases. For example, "including A and/or B" means including at least one of A and B, i.e., including the following three parallel cases. (1) Only A is included. (2) Only B is included. (3) Both A and B are included. For example, the term "perform a block and/or another block" means performing at least one of two blocks, including the following three parallel cases. (1) Only a first block is performed. (2) only a second block is performed. (3) Both the two blocks are performed.

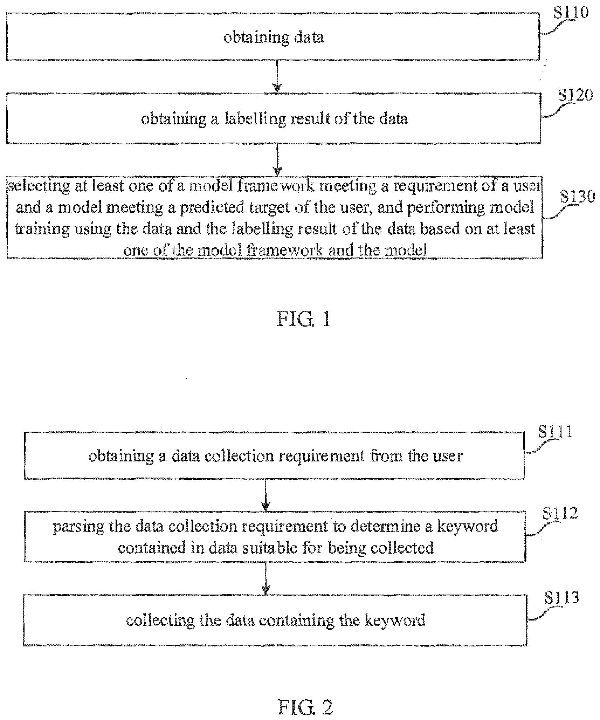

FIG. 1 is a flowchart illustrating a method for performing a machine learning process according to example embodiments of the disclosure. The "machine learning" mentioned in the disclosure includes not only logistic regression algorithm, support vector machine algorithm, GBDT (gradient boosting decision tree) algorithm, and naive Bayes algorithm, but also deep learning based on a neural network. The method may be executed by at least one computing device.

As illustrated in FIG. 1, at block S110, data is obtained.

The data obtained may be data uploaded by a user or collected in other manners. For example, the data may be data collected through network crawling, database retrieval, and issuing data collection tasks to a data collector. The "user" mentioned in the disclosure refers to a user who desires to train a model. The "data collector" mentioned in the disclosure refers to a person who I can perform the data collection tasks to collect corresponding data.

At block S120, a labelling result of the data is obtained.

The data obtained at block S110 may have or not have a labelling result. A method for acquiring the labelling result is not limited in embodiments of the disclosure. That is, the data can be labelled with the labelling result in any way. The labelling result can be an objective and real labelling conclusion or a subjective result of manually labelling. In a case that the data acquired at block S110 has a labelling result, the labelling result of the data can be directly obtained. In a case that the data obtained at block S110 has no labelling result or a part of the data obtained at block S110 has no labeling result, the data may be labelled to obtain the labelling result of the data. As an example, labelling tasks corresponding to a predicted target can be issued based on the predicted target of training a model. The data can be manually labelled by labelers to obtain the labelling result of the data. The predicted target refers to predicted functions realized by a trained model and desired by the user. For example, the user may expect a model for identifying a cat from an image, and thus the predicted target is "identifying a cat from an image. The "labeler" refers to a person who can manually label data.

At block S130, a model framework matching user's requirement and/or a model matching user's predicted target are selected. Model training is performed using the data and labelling results based on the model framework and/or the model.

The "model framework" mentioned in the disclosure is a framework used for training models based on machine learning algorithms. In the disclosure, one or more task types can be preset and one or more model frameworks can be set for each task type. According to some example embodiments of the disclosure, one or more model frameworks can be preset depending on characteristics of each task type, such that the machine learning algorithm corresponding to the preset model framework may help to solve tasks of a corresponding task type. Therefore, selecting the model framework matching user's requirements may refer to selecting a model framework from model frameworks that correspond to the task types and match the user's requirements. Descriptions of the implementation process of selecting the framework and descriptions of the task types will be described in detail below.

The "model" mentioned here may be a previously trained model. The model may be trained based on the disclosure or trained using other methods. For example, the model may be trained by using training samples based on a corresponding model framework.

Therefore, selecting a model matching the user's predicted target may refer to selecting the model matching the user's predicted target from previously trained models. The predicted target refers to predicted functions achieved by the model trained based on the user's desires. For example, in a case a function achieved by the model trained based on the user's desires is identifying cats in an image, the predicted target is "identifying cats in an image". The model matching the user's predicted target refers to a model that can achieve the same or similar functions as the predicted target. For example, in a case that the user's predicted target is "identifying cats in an image", a previously trained model that is used for identifying cats in an image may be used as the model matching the user's predicted target, or a previously trained model used for identifying other types of animals (such as dogs, pigs or the like) can be used as the model matching the user's predicted target.

According to some example embodiments of the disclosure, the "model" mentioned in the block S130 may be obtained by performing model training based on a corresponding model framework. In this case, for selecting the model matching the user's predicted target from the previously trained models, models suitable for the user's predicted target may be searched for from the previously trained models and models trained based on the model framework corresponding to the task types matching the user's requirements are selected from the selected models. In some examples, models trained based on the model framework corresponding to the task types matching the user's requirements are selected from the previously trained models and the models suitable for the user's predicted target are searched for from trained models. As a result, the obtained models can well meet the user's requirements.

During performing the model training using data and the labelling results, the model training may be performed using the data and the labelling results based on selected model frameworks. In some embodiments, during performing the model training using data and the labelling result, the model training may also be performed based on selected models. For example, the selected models may be updated using the data and the labelling result. In some embodiments, during performing the model training using data and the labelling results, the model training may be performed based on a comprehensive condition of selecting the model frameworks and the models, using data and the labelling results. For example, the model training may be performed by preferentially using the selected models, and in a case that no selected model suitable for the user's predicted target is obtained, the model training may be performed based on the selected model frameworks. In detail, in a case that a selected model matching the user's predicted target is obtained, the selected model may be updated using the data and the labelling results. In a case that no selected model matching the user's predicted target is obtained, the model training may be performed based on the selected model frameworks using the data and the labelling result. During performing the mode training based on the selected modes, the selected models may be adjusted. For example, the network structure of the models may be slightly adjusted, and the model training may be performed based on the slightly adjusted models.

According to some example embodiments of the disclosure, the acquired data and the labelling results thereof can be stored in a user database corresponding to the user, and the trained model can be saved. The trained model (i.e., the user model described below) and/or a permission of externally accessing the user database may be related to the user's settings. In a case that the user database may be accessed externally, data stored in the user database can be used by other users, and/or in a case that the model is set to be open to external, the model can be used by other users.

According to some example embodiments of the disclosure, after the model training is completed, a user-oriented application programming interface (API) can be generated in response to a model application request from a user, such that the user can obtain a prediction service provided by the model through the API.

Further, resources required by the model for proving the prediction service may be dynamically adjusted based on an amount of prediction requests initialed by the user through the API. For example, in a case that the amount of prediction requests is large, more resources, such as CPU and memory, may be allocated. In a case that the amount of prediction requests is small, less resources, such as CPU and memory, may be allocated. Therefore, user requirements may be met, while saving platform resources.

The above describes a basic flow illustrating the method for executing the machine learning process according to the disclosure in combination with FIG. 1. In conclusion, the disclosure can automatically fit a relationship between the data x and a learning object y (i.e., the labelling result) by automatically selecting the suitable model framework and/or model based on the user's requirements and/or the user's predicted target to obtain a model meeting the user requirements. In addition, the disclosure may provide an online prediction service using the obtained model. The user can upload an input image x and a prediction y on x may be turned by the service through various methods such as http request and grpc request. As a result, the difficulty of the machine learning process can be reduced a level of not requiring the user to know algorithm knowledge. Based on the disclosure, an online service capability of the model may be quickly provided to the user.

The method illustrated in FIG. 1 can be implemented as a machine learning platform, which can help to automatically achieve implementations of the machine learning models (such as deep learning models) for the user. In addition, the platform may be integrated with one or more of following functions, data acquisition, data labelling, automatic launch functions of models (i.e., providing online prediction services by the models), model updating and model interpretation, to well serve users.

Various aspects and related details involved in the disclosure will be further described below.

### [Data Acquisition]

While acquiring the data, the data uploaded by the user can be acquired. The data uploaded by the user may be data with or without annotations. In addition, data can also be collected based on user requirements. For example, the data can be collected in a case that the user does not upload the data or the uploaded data is insufficient.

FIG. 2 is a flowchart illustrating a method for acquiring data according to example embodiments of the disclosure.

As illustrated in FIG. 2, at block S111, a data collection requirement is obtained from the user.

As an example, in a case that the user does not upload data for the model training or the amount of data uploaded by the user is insufficient for the model training (e.g., the amount is less than a first predetermined threshold), the data collection requirement may be obtained from the user.

The data collection requirement refers to a description of the data that the user desires to collect. The data collection requirement can be text or voice. For example, the data collection requirement from the user can be the text "require to collect pictures containing various fruits", or the voice corresponding to the text. In addition, the data collection requirement can also be obtained by analyzing the predicted target of the model. For example, in a case that the predicted target specified by the user is cats and dogs classification model, the data collection requirement obtained by analyzing this predicted target may be acquiring the pictures containing cats or dogs. image.

At block S112, the data collection requirement is parsed to obtain keywords suitable for collected data.

After the data collection requirement is determined, keywords of relevant data can be obtained by parsing the meaning or components of the requirement.

As an example, in the case that the data collection requirement is text, the data collection requirement may be parsed directly in a way of semantic analysis (such as NLP technology) to determine the keywords suitable for the collected data. In the case that the data collection requirement is voice, the voice may be recognized as text by with the speech recognition technology and the data collection requirement may be parsed in a way of semantic analysis (such as NLP technology) to determine the keywords suitable for the collected data. The keywords may be regarded as a general description of the data in one or more characteristic dimensions. If the data is pictures, the keywords can be labels of the pictures. For example, definition, picture content description, picture source and other labels can be used as the keywords.

As an example, semantic analysis can be performed on the data collection requirement to determine a data object that the user desires to obtain. For example, the data object refers to an object contained in the data and desired by the user to obtain, such as a target (or an item) contained in data. For example, for the data collection requirement "require to collect pictures containing various fruits", it may be determined that the data object that the user desires to obtain is "fruit".

In some embodiments, after the data object is obtained, the data object can be applied to the knowledge graph to obtain derived objects. The derivative objects can be horizontally derived objects that is the same or similar to the type of the data object. In some examples, the derived objects can be a downwards derived object, which is a subclass of the data objects. For example, for the data object "fruit", through the knowledge graph, multiple downwards derived objects such as "apple," "banana," "orange," and "cherry" can be obtained. In some examples, for the data objects, such as "apple," "banana," and "orange", through the knowledge graph, horizontally derived objects, such as "pear," "peach," and "pineapple" can be obtained. Therefore, the keywords mentioned in the disclosure may refer to the data objects and/or the derived objects.

At block S 113, data with keywords is collected.

In some examples, the data can be collected through, but not limited to, anyone or more of the following three manners. Manner one, the data with keywords can be retrieved from a database. The data in the database has known keywords. The "database" mentioned here may include a public database and/or a user database. The public database refers to a database that is open to external, while the user database refers to a private database against other users. The permission of opening the user database to external is related to the user's settings. Manner two, data with keywords is searched for on the network. For example, the data with keywords may be obtained by crawling the Internet. Manner three, a collection task for collecting the data with keywords can be generated and the collection task can be issued to one or more collectors such that the collectors can collect the data with keywords.

As mentioned above, the user database corresponding to the user can also be maintained and the collected data can be stored in the user database. In addition, after the data is collected, labelling tasks corresponding to the predicted target of the model training may be issued based on the predicted target to obtain the labeling results of the collected data and store the data and the relevant labelling results of the data in the user database.

In the disclosure, the permission of externally accessing the user database can be determined based on the permission setting of the user. In a case that the user database is set to be open to external, the data in the user database can be used by other users. For example, while retrieving the data with keywords from the database, the data may be retrieved from the user database that is open to other users.

Therefore, for a user having no data or insufficient data, the data collection for the model training can be automatically and effectively realized while the user desires to train the model for solving a specific problem through the machine learning technology.

### [Data Labelling]

In the case that the acquired data does not have any labelling results or the amount of the data with labelling results is insufficient (e.g., the amount of the data with labelling results is less than a second predetermined threshold), the labelling tasks corresponding to the predicted target of the model training can be issued based on the predicted target, to obtain the labelling results of the data. The labelling tasks can be issued to one or more labelers who can perform manual labelling. The labelers can perform the manual labelling on the data to be labelled. The manual labelling results can be managed. For example, the labelling results can be stored in association with the data.

In the process of the manual labelling by the labelers, in order to reduce the labor of the labelers to perform the manual labelling, improve the efficiency of the manual labelling, and save the labor cost, the disclosure further provides a solution for assisting the labelling.

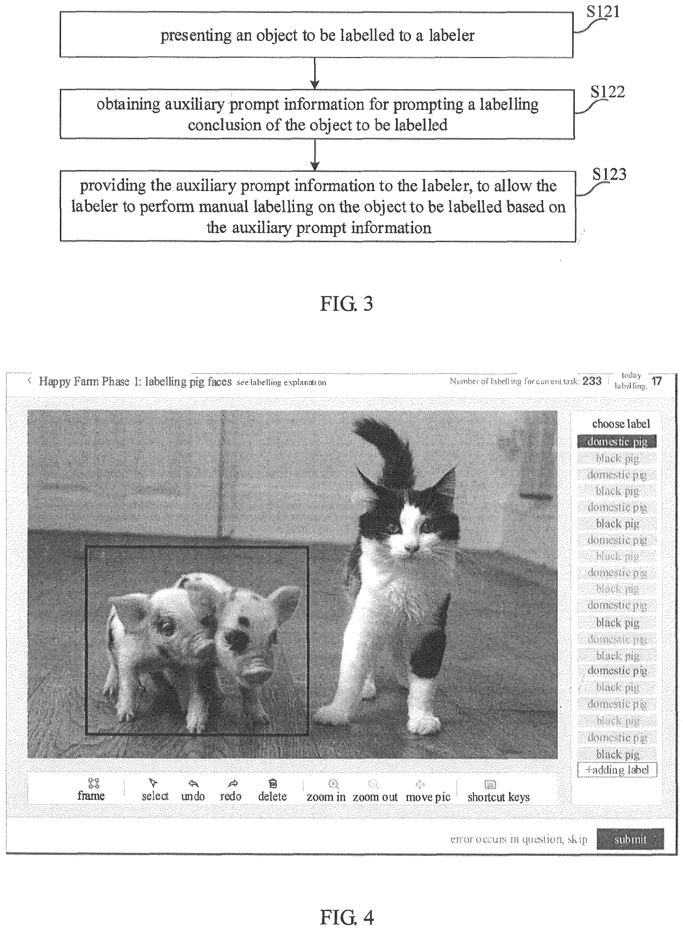

FIG. 3 is a flowchart illustrating a method for assisting labelling according to example embodiments of the disclosure.

As illustrated in FIG. 3, at block S121, an object to be labelled is presented to a labeler.

The block S121 is mainly to visually present the object to be labelled to the labeler. The object to be labeled may include raw data to be labeled. For example, the object to be labeled may be an image containing a target (or item) to be labeled, or a piece of text containing words that part-of-speech is to be labeled. The target (or item) to be labeled contained in the object to be labeled, the labeling formats, and the labeling content are all related to certain labeling requirements of the labeling tasks.

At block S122, auxiliary prompt information for prompting a labelling conclusion of the object to be labelled is obtained. The block S122 may be executed before the block S121, simultaneously with the block S121, or after the block S121. The execution sequence of the blocks S121 and S122 is not limited in the disclosure.

The labeling conclusion refers to a true label of the object to be labelled. It should be noted that the obtained auxiliary prompt information is a prompt or reference of the labeling conclusion of the object to be labelled. That is, the auxiliary prompt information itself is not the labelling conclusion, but is only a preliminary labelling conclusion. The auxiliary prompt information is used as a prompt of the true labelling conclusion of the object to be labelled to a certain extent. Therefore, in practical applications, the obtained auxiliary prompt information may be deviated from the true labelling conclusion of the object to be labelled, or even opposite to the true labelling conclusion. That is, although an original purpose of the block S122 is to obtain the auxiliary prompt information that approaches closely the true labelling conclusion of the object to be labelled, due to the different methods (which will be described below) and different accuracies of obtaining the auxiliary prompt information, the auxiliary prompt information may be a wrong labelling conclusion.

At block S123, the auxiliary prompt information is provided to the labeler, to allow the labeler to perform the manual labelling on the object to be labelled based on the auxiliary prompt information.

Here, the auxiliary prompt information is mainly provided to the labeler in human-understandable way. For example, the auxiliary prompt information can be displayed to the labeler visually. Depending on labeling problems involved in the labeling tasks, the content and display formats of the auxiliary prompt information are different.

Generally, labelling problems can be divided into a classification-related problem and an identification-related problem, which may be subdivided into various labeling problems such as image classification, object framing, semantic segmentation, image annotation, face marking, and video tracking. The image classification refers to selecting a label to which the image or an object contained in the image belongs based on the image content, such as a scene label, an object type label, an object attribute label, a gender label, and an age label. The object framing refers to framing a target object contained in the image based on labeling requirements. For example, vehicles, license plates, pedestrians, roads, buildings, ships, texts, and body parts contained in the image can be framed and labelled. The semantic segmentation refers to labelling an outline of a target object contained in the image using a polygon and providing coordinates of all points of the outline based on the labelling requirements. The image annotation refers to generating Chinese annotation sentences for each image for certain scenes of the image and labelling requirements. The face marking refers to locating and dotting key positions of the face based on the face contained in the image and the labelling requirements, such as the face profile, eyebrows, eyes, and lips. The video tracking refers to selecting key frames from a target video at a specified frequency and framing and labelling the key frames. The label and serial number of the same target in each frame are consistent.

In a case that the labelling problem is the image classification, the auxiliary prompt information can be the preliminary labelling conclusion (such as the label) of the object to be labelled (i.e., an image to be labelled). In a case that the labelling problem is the object framing, the auxiliary prompt information can include a framing result and labelling information. In a case that the labelling problem is the semantic segmentation, the auxiliary prompt information can be a framing result of the outline of a target object contained in the object to be labelled. In a case that the labelling problem is the face marking, the auxiliary prompt information can be a dotting result of multiple key positions of the face contained in the object to be labelled. In a case that the labelling problem is the video tracking, the auxiliary prompt information can be a framing result of a target object contained in each frame selected. In addition, for other types of labelling questions, the specific content and display formats of the auxiliary prompt information may be different, which is not described in this disclosure.

As mentioned above, the auxiliary prompt information is used as a reference or a prompt of the labelling conclusion of the object to be marked. Therefore, the labelled can perform the manually labelling on the object to be labelled based on the auxiliary prompt information. The auxiliary prompt information provided to the labeler can be regarded as a defaulted labelling conclusion of the system. The labeler can determine whether the auxiliary prompt information is consistent with his/her desired result based on his/her own knowledge. If consistent, the labeler can accept the auxiliary prompt information to complete the labelling of the object to be labelled, thereby greatly improving efficiency of the labelling. In addition, if the labeler thinks that the auxiliary prompt information is slightly different from his/her desired labelling result, the labeler can adjust the auxiliary prompt information, for example, adjusting a framing range or adjusting content description. Furthermore, if the labeler thinks that the auxiliary prompt information is greatly different from his/her desired labelling result, the auxiliary prompt information can be discarded and the labeler can perform the manual labelling completely different from the auxiliary prompt information of the object to be labelled.

As an example of the disclosure, it is possible to provide auxiliary prompt information to the labeler while presenting the object to be labelled to the labeler. In other words, the object to be labelled displayed to the labeler may include the auxiliary prompt information. For example, the labelling task may be "labeling pig faces" and thus the labeling requirements may be framing pig faces contained in the image to be labelled. Therefore, the auxiliary prompt information may be a preliminary result of framing the pig faces in the image. As illustrated in FIG. 4, the object to be labelled is the image, and the frame on the image is the auxiliary prompt information, that is the preliminary result of framing the pig faces. The labeler can accept the framing result or readjust the framing result to re-determine the framing range. For example, the labeler can reduce the size of the frame and add a line to the frame to select two pigs simultaneously to select other parts than the pig faces as less as possible.

As can be seen, the auxiliary prompt information is only used to provide a possible labelling conclusion of the object to be labelled, which is not always accurate. Therefore, the labeler can accept the auxiliary prompt information, adjust the auxiliary prompt information, discard the auxiliary prompt information, or perform the labelling operation completely different from the auxiliary prompt information based on his own knowledge. In other words, the auxiliary prompt information is only a possible conclusion served as a prompt, and the final labelling result is still controlled by the labeler.

As an example of the disclosure, a difference between a manual labelling result and the auxiliary prompt information may be provided to the labeler. In detail, the manual labeling result of the object to be labelled can be obtained in response to the manual labelling performed by the labeler, and the difference between the manual labelling result and the auxiliary prompt information can be provided to the labeler. In some examples, the difference can be prompted to the labeler in real time in response to the manual labeling performed by the labelled. In some examples, the difference may be provided to the labeler when the difference is greater than a certain threshold (for distinction, called as "third predetermined threshold" here), to prompt the labeler of this kind of difference. Therefore, the mislabeling operation caused by the carelessness of the labeler may be reduced to a certain extent.

The basic principle and implementations of the solution for assisting the labelling according to the disclosure have been described in conjunction with FIG. 3 and FIG. 4. Below, various aspects involved in the solution for assisting the labelling will be described.

### 1. Auxiliary Prompt Information

As an example, the auxiliary prompt information can be obtained in the following two ways.

A first way for obtaining the auxiliary prompt information will be described below.

The auxiliary prompt information may be obtained based on objects having known labelling conclusions. In detail, the auxiliary prompt information may be obtained based on the labelling conclusions of the objects same or similar to the object to be labelled. For example, the labelling conclusions of the objects that are the same as or similar to the object to be labelled can be directly used as the auxiliary prompt information for the object to be labelled. The labelling conclusions of the objects that are the same or similar to the object to be labelled may be a manual labelling result, a model prediction result, or a true conclusion.

As an example, an object that is the same or similar to the object to be labelled and has a labelling conclusion can be obtained in various ways.

For example, the object that is the same or similar to the object to be labelled and has the labelling conclusion can be selected from a database storing various objects. The database may be maintained by a platform, and the objects stored in the database may preferably be the objects having known labelling conclusions. The source of the objects in the database is not limited in the disclosure. For example, the object may be an object that is manually labelled, or the object may be an object having the true labelling conclusion (such as public data).

As another example, the object that is the same or similar to the object to be labelled and having the labeling conclusion can also be obtained through the network. For example, an object that has a known true labelling conclusion and is the same or similar to the object to be labelled can be obtained through a web crawler.

As another example, another labelled object belonging to the same labelling task as the object to be labelled can also be determined as the object that is the same or similar to the object to be labelled. The labelled object may be an object that has been labelled and passed the labelling result verification.

In addition, other methods can be used to obtain the object that is the same or similar to the object to be labelled and has the labelling conclusion. One or more of the above-mentioned methods may be used for obtaining the object that is the same or similar to the object to be labelled.

A second way for obtaining the auxiliary prompt information will be described below.

The auxiliary prompt information may be obtained through a machine learning model. In detail, a prediction result of the object to be labelled may be obtained through the machine learning model as the auxiliary prompt information. The machine learning model is trained to predict the labelling conclusion of the object to be labelled. For example, the machine learning model may be a prediction model trained based on a same labelling task. If a certain user (such as the above-mentioned user who desires to train the model) issues an image labelling task on the platform (for example, the user uploads the image data of his pig farm and expects some labelers to label the image data), a unified machine learning model may be trained for the user (that is, the user's labelling task) without considering the labelling differences of different labelers. The machine learning model can be trained to predict the labelling conclusion of the object to be labelled, and the predicted labelling conclusion can be used as the auxiliary prompt information.

As an example of the disclosure, the machine learning model may be trained based on at least part of the labelled objects belonging to the same labelling task as the object to be labelled and their manual labelling results. In other words, the at least part of the labelled objects belonging to the same labelling task and their manual labelling results can be used as training samples for performing the model training. The training samples here can preferably be generated from labelled objects whose manual labelling results are verified and approved. That is, the labelled objects and the manual labelling results can be used as the training samples of training the model. Therefore, the training process of the machine learning model can be carried out after the labelling task is released for a period of time to accumulate an appropriate number of training samples.

As an example of the disclosure, the machine learning model may also be trained based on non-labelled objects that are the same or similar to the object to be labelled and their true labelling conclusions. In other words, non-labelled objects that are the same or similar to the object to be labelled and their true labelling conclusions can be used as training samples for performing the model training. The non-labelled object may be an object whose true labelling conclusion is known. For example, the non-labelled object may be collected data stored in the database, previously stored data, or data from the network. In this way, the "cold start" problem can be solved, and the training process of the machine learning model can be performed in advance. For example, the machine learning model can be trained in advance for the labelling task before the labelling task is issued to the labeler and the object to be labelled is displayed.

### 2. Machine Learning Model

As mentioned above, the machine learning model is trained to predict the labelling conclusion of the object to be labelled. The predicted labelling conclusion can be used as the auxiliary prompt information. Therefore, the higher the prediction accuracy of the machine learning model, the closer the auxiliary prompt information to the true labelling conclusion, the less the labor of the labeler of performing the manual labelling based on the auxiliary prompt information, and the lower the cost of the manual labelling.

Based on the above, the disclosure proposes to update the machine learning model based on the manual labelling results of the objects to be labelled from the labelers, to improve the accuracy of the prediction result of the machine learning model. In detail, the manual labelling result of the object to be labelled can be obtained in response to the manual labelling performed by the labeler, and the machine learning model can be updated based on the object to be labelled and the manual labelling result.

Since the manual labelling result is obtained based on the labeler's own perception, which is not always accurate. Therefore, preferably, the manual labelling results of the objects to be labelled can be verified, and the machine learning model can be retrained or incrementally trained by using objects to be labelled and the manual labelling results passing the verification. For example, in the classification task, features of objects to be labelled passing the verification can be used as features of the training samples and the manual labelling results as labels of the training samples to generate the training samples to retrain or incrementally train and the machine learning model. The retraining or incremental training process of the model is well known in the art, which is not repeated here.

As an example of the disclosure, it is possible to focus on learning the manual labelling results that are significantly different from the prediction results (i.e., auxiliary prompt information) of the model (but the difference is not caused by freely labelling of the labelers). In other words, the machine learning model may be updated based on some objects to be labelled and the manual labelling results in which the difference between the manual labeling result of these objects to be labelled and the auxiliary prompt information is greater than the third predetermined threshold. The manual labelling result here may be a result passing the verification. That is, the manual labelling result that passes the verification and has a difference greater than the third predetermined threshold and the object to be labelled can be used as the training samples to update the machine learning model.

In some embodiments, a labelling result feedback of the object to be labelled can be additionally obtained to generate the training samples for updating the machine learning model. In detail, a feedback mechanism can be established additionally on the labelling platform to collect the labelling result feedbacks about the objects to be labelled (for example, the labelling result feedbacks are obtained by correcting the labeler's manual labelling results through others), and the machine learning model is updated using the objects to be labelled having the labelling result feedbacks.

As mentioned above, in some examples, the machine learning model can be continuously updated based on labelling data generated or collected by the platform, thereby improving the accuracy of the auxiliary prompt information.

### 3. Labelling Quality Evaluation

In order to prevent labelers from blindly accepting the auxiliary prompt information without thinking, to well know the credibility of labeler's labelling results, to pay remuneration to labelers, to adjust labelling levels of the labelers, and to adjust a reward mechanism of the labelers, the labelling quality may be evaluated. For example, a human auditor can be set to randomly check the labelling quality.

As an example of the disclosure, the labelling quality can be evaluated for a labeler based on the difference between the manual labelling results of the same object to be labelled from the labeler and one or more other labelers. For example, a same object to be labelled under the same labelling task may be issued to a labeler A and multiple other labelers, such as labelers B, C, and D. When issuing the same object to be labelled to the multiple other labelers, it is preferable to select the labelers of high labelling quality evaluation. The labelling quality of the labeler A can be evaluated based on the difference among the manual labelling results of the same object to be labelled from the labeler A and these multiple other labelers. For example, it may be considered that the labelling quality of the labeler A is poor if the labelling result from the labeler A is greatly different from all the labelling results from the multiple other labelers.

As another example of the disclosure, the labelling quality of a labeler can also be evaluated based on a difference between a manual labelling result of the object to be labelled from the labeler with a true labelling conclusion. For example, an object whose true labelling conclusion is known may be randomly selected as the object to be labelled and sent to the labeler. The labeler may manually label the object. The manual labelling result may be compared with the true labelling conclusion. If the difference is large, it may be considered that the labelling quality of this labeler is poor. If the manual labelling result is consistent or almost consistent to the true labelling conclusion, it may be determined that the labelling quality of this labeler is high.

As another example of the disclosure, the labelling quality of the labeler can also be evaluated based on a difference between the manual labelling result and the auxiliary prompt information. For example, in the case that the auxiliary prompt information is obtained from the machine learning model that has been fully updated and trained, the labelling quality of the labeler can be evaluated based on the difference between the manual labelling result and the auxiliary prompt information. If the difference between the manual labelling result from the labeler and the auxiliary prompt information is large, it can be considered that the labelling quality of this labeler is poor. The supervision and evaluation on the labelling quality of a labeler who continuously accept the auxiliary prompt information may be focused on.

It should be noted that one of the above-mentioned evaluation methods may be selected to evaluate the labelling quality of the labeler, or the above-mentioned evaluation methods may be combined to evaluate the labelling quality of the labeler, which is not limited in the disclosure.

According to the result of evaluating the labelling quality of the labeler, the labelling level of the labeler can be adjusted. For example, a corresponding credibility score may be assigned to a labeler based on the labelling quality of the labeler. Labelling remuneration or punishment of the labeler may be adjusted to encourage the labeler to improve the labelling quality. In addition, different labelling tasks can be issued to different labelers based on the labelling quality of these labelers. For example, the labelling tasks with high remuneration can be issued to the labelers with the high labelling quality, or more tasks may be issued to the labelers with the high labelling quality. Accordingly, the labelling tasks with low remuneration can be issued to the labelers with the low labelling quality, or less tasks may be issued to the labelers with the low labelling quality.

### [Model Framework]

As described above, one or more model frameworks can be preset depending on the characteristics of each task type, such that the machine learning algorithm corresponding to the preset model framework helps to solve tasks of a corresponding task type.

As an example, task types may be set based on problem type that the user desires to solve, and different task types correspond to different problem classifications. For a problem related to image data, the tasks can include image classification tasks, object recognition tasks, text recognition tasks, image segmentation tasks, and feature point detection tasks.

The image classification refers to distinguishing different image categories based on the semantic information of the image. Image classification is an important basic problem in computer vision. Different image categories are distinguished based on the semantic information of the image and labeled with different categories. The image classification is the basis of other high-level vision tasks such as image detection, entity segmentation, and object tracking. The image classification has a wide range of applications in many fields, including face recognition in the security field, intelligent video analysis, and traffic scene recognition in the transportation field.

The object recognition is to perform object localization and object classification on the image content. The object recognition refers to a process of classifying and labelling different objects existing in the image after framing the objects with the detection frames based on the semantic information of the image. Considering that picture data in real life usually describes a scene where multiple objects coexist, it is often difficult to effectively perform the object recognition using a single image classification. In this case, with the aid of an idea of separated management, the object recognition firstly locating objects and then classifying objects to greatly improve the accuracy of the recognition results, and thus the object recognition has a wide range of applications in aerospace, medicine, communications, industrial automation, robotics and military fields.

The text recognition is to perform text localization and text extraction on text contained in the picture. The text recognition (OCR) intelligently recognizes the text content on the picture as computer editable text. Based on an actual use scene, the text recognition can be divided into printed text recognition and handwritten text recognition. The former has a relatively high recognition accuracy due to the printed text has a unified text standard and a fixed style, whereas the latter has a relatively high recognition cost due to the handwritten text has a certain openness and freedom. The text recognition technology based on deep learning can effectively replace manual information entry because of its end-to-end modeling capabilities. The text recognition has been significantly promoted in the finance and insurance industries where the need for bill and document recognition is frequent.

The image segmentation is to divide the image content into sub-regions based on visual characteristics. The image segmentation refers to a process of subdividing a digital image into multiple image sub-fields (a set of pixels). The purpose of image segmentation is to simplify or change the representation of the image, making the image easier to understand and analyze. The image segmentation is usually used to locate objects and boundaries (lines or curves) in the image. To be more precise, the image segmentation is to label each pixel of the image. This process allows the pixels with the same label to have certain common visual characteristics, such as color, brightness, and texture. The image segmentation is used in object tracking and positioning in satellite images, tumor positioning in medical images, and volume measurement.

The feature point detection is to extract key feature points having a significant visual characteristic (such as grayscale) from the image. The image feature point refers to a point where the gray value of the image changes drastically or a point having a large curvature on the edge of the image (i.e., an intersection of two edges). The image feature point may reflect essential characteristics of the image and identify a target object in the image, such that the image matching may be done through matching of feature points. The color and the texture, as global representation of the image, can assist the understanding of the image, but they are easily affected by the environment. Local feature points, such as spots and corners generally corresponding to lines, edges, and bright-dark structures in the image, are less affected by the environment and can be effectively applied to application scenarios such as image matching and retrieval.

For selecting the model framework, the task type matching the user's requirements is determined, and the model framework is selected from model frameworks corresponding to the task type matching the user's requirements. The task type matching the user's requirements may be determined in a variety of ways. For example, the user can characterize their requirements by defining the form of tasks and select the task type matching the user-defined task from a variety of preset task types as the task type matching the user's requirements. As another example, it is also possible to provide the user with introduction information of multiple task types, such that the user can select a suitable task type according to his/her own requirements.

Therefore, in response to an operation of selecting a task type from the user, the model framework can be selected from model frameworks corresponding to the task type selected by the user, or the task type matching the user-defined task can be selected from one or more task types, and the model framework may be selected from the model frameworks corresponding to the selected task type.

As an example of the disclosure, the model framework may be randomly selected or specified by the user from the model frameworks corresponding to the task type matching the user's requirements.

As another example of the disclosure, for each model framework corresponding to the task type that matches the user's requirements, optimal hyperparameter combination of each model framework may be obtained through a manner of hyperparameter optimization, and the model framework performing best and its optimal hyperparameter combination may be selected. For example, for each model framework corresponding to the task type that matches the user's needs, algorithms such as grid search, random search, and Bayesian optimization may be used to set different hyperparameter combinations, the model may be trained with the training samples, the model is tested. The set of hyperparameters of the model that performs best (for example, the model can be evaluated based on test indicators such as accuracy and loss) can be used as the optimal hyperparameter combination under the model framework. The optimal hyperparameter combinations under different model frameworks are compared with each other to select the model framework with the best performance (such as high accuracy and low loss) and its optimal hyperparameter combination.

The model framework is a framework for training models based on machine learning algorithms. Based on the selected model framework, training samples can be used for the model training. For example, the model may be trained with the training samples based on the selected model framework and its optimal hyperparameter combination. In a case that the optimal hyperparameter combination of the selected model framework is not determined, algorithms such as grid search, random search, and Bayesian optimization can be used to determine the optimal hyperparameter combination of the selected model framework. The process of searching for the optimal hyperparameter combination can be referred to the above description, which is not repeated here.

As an example of the disclosure, because different model frameworks have different parameters, calculation time, and accuracy that can be achieved theoretically, the users can also define model usage scenarios, such as terminal usage scenarios (fast computing speed and reduced accuracy of performance), cloud usage scenarios (show computing speed and improved accuracy of performance) and other scenarios. Based on the user-defined usage scenario, a model framework matching the usage scenario can be selected from the model frameworks corresponding to the task type that matches the user's needs.

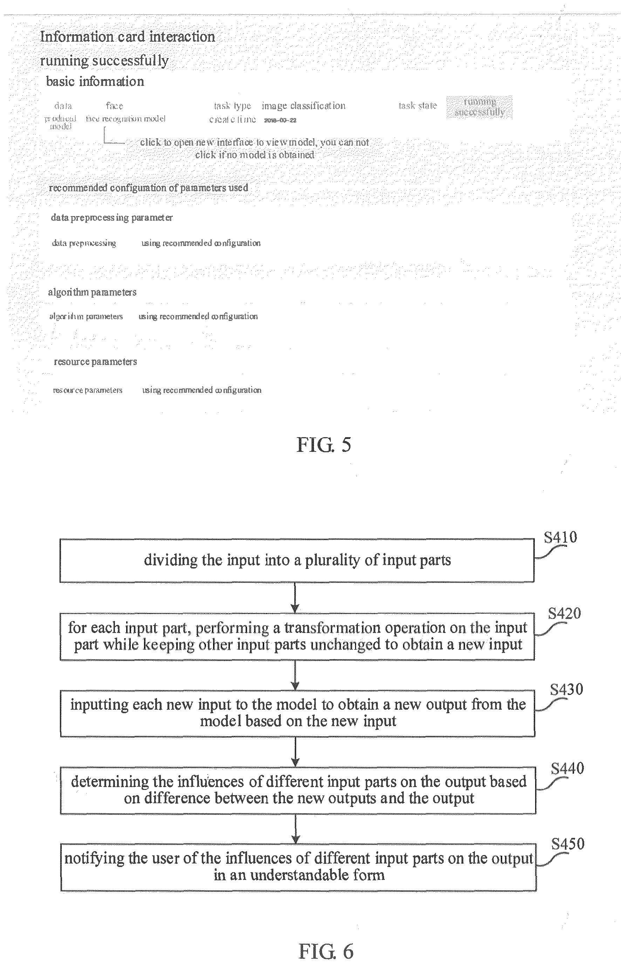

FIG. 5 is a schematic diagram illustrating an interface after the model is generated. As illustrated in FIG. 5, after the model is successfully trained, the basic information of the model, such as data source, task type, task status, and output model, can be presented to the user. Parameter configuration information used in the training process can also be presented to the user. The parameter configuration information may include, but is not limited to, data preprocessing parameters, algorithm parameters, and resource parameters. The data preprocessing parameters mainly include parameters of one or more preprocessing operations performed on the data. Taking image data as an example, the data preprocessing parameters can include random cropping, scaling, flipping left and right, flipping up and down, rotating, super pixel, grayscale, Gaussian blur, mean blur, sharpen, point-by-point noise, roughly discard and other data preprocessing parameter configuration information. The algorithm parameter may be a hyperparameter combination of the model framework, which may be an optimal hyperparameter combination determined by a hyperparameter optimization method. The resource parameters may include physical resource parameters such as CPU and memory for model training or model using.

### [Model Explanation]

After the model training is completed and the trained model is launched, the user can use the model to predict an input to obtain an output. The disclosure can also explain influences of different parts of the input on the output, so that after using the machine learning model to obtain the output based on the input, the user can also learn the influences of different parts of the input on the output. Therefore, it can be learned which part of the input is mainly used by the model to perform the prediction, that is, the output. Further, the credibility of the output of the machine learning model may be enhanced at the user level to a certain extent.

FIG. 6 is a flowchart illustrating a method for model according example embodiments of the disclosure. The method illustrated in FIG. 6 is mainly used to explain obtaining the output (called as "original output" for the sake of distinction) from the input (called as "original input" for the sake of distinction) by the model. In detail, the method can be used to explain the influences of different input parts of the input on the output. The model mentioned here may be a machine learning model, such as a deep learning model based on a neural network. Below, the method may be described by taking the image model as the model, an image as the input, and a prediction result of the image as the output. It should be understood, the method for model interpretation according to the disclosure can also be applied to a model for predicting other types of inputs (such as text input).

As illustrated in FIG. 6, at block S410, the input is divided into multiple input parts.

The input may be divided into multiple input parts in various ways. For example, the input is an image, and thus the image may be divided into multiple regions with the same or similar shape and size to obtain multiple input parts. For example, the image can be divided into N × M grids. In addition, the image can also be divided into multiple input parts depending on the similarity of image features. The image feature refers to such as color, texture, brightness or the like. Pixels in the same input part have the same or similar image features. While dividing the input into input parts based on the image features, the pixels in the same input part may have the same or similar image features and are adjacent to each other. That is, in the case that the input is divided into the input parts based on the image features, the location factor can also be considered to group the adjacent pixels with the same or similar image features into the same input part. Certainly, other division methods may be used, which are not described here.

At block S420, for each input part, transformation operation is performed on the input part while keeping other input parts unchanged, to obtain a new input.

Comparing with the original input, only one input part of the new input is replaced by a transformed input part (also called "disturbance input") obtained after the transformation operation. For each input part, the transformation operation may be applied to the input part in a variety of ways to obtain the disturbance input (also called "noise disturbance") of the input part. For example, the input part may be randomly transformed within a predetermined transformation range to obtain a disturbance part for replacing the input part. In some example, the input is an image, and thus the value of each pixel of the input part can be randomly transformed within the value range of pixels. The value range of pixels refers to a range of pixel values, which is related to the bit per pixel (BPP). For example, for 8bpp, the number of pixel values is 2⁸, and thus the value range of pixels can be between 0 to 255. For 16bpp, the number of pixel values is 2¹⁶, and thus the value range of pixels can be between 0 to 65535.

At block S430, each new input is re-input to the model to obtain a new output of the model based on the new input.

At block S440, influences of different input parts on the output is determined based on the difference between the new output and the output (that is, the original output).

Each new input can be regarded as an input obtained by performing the transformation operation on only one input part of the original input. That is, only one input part is disturbed. In the case that the new output is different from the original output, it can be considered that the transformed input part of the new input has a certain influence on the output. Conversely, in the case that the new output is the same as the original output, it can be considered that the transformed input part of the new input is not significant to the output, and thus has no influence on the output.

In other words, in the case that the new output is the same as the output, it can be determined that the transformed input part in the new input corresponding to the new output has no influence on output; and/or in the case that the new output is different from the output, it can be determined that the transformed input part in the new input corresponding to the new output has an influence on the output.

At block S450, the influences of different input parts on the output are notified to the user in an understandable form.

After the influences of different input parts on the output are determined, the user can be informed of the influences of different input parts on the output in a variety of user-understandable ways. For example, the user can be informed of the influences of different input parts on the output in the form of text (such as a list), or the influences of different input parts on the output can be marked in the input. For example, different prominence degrees can be used to highlight different input parts in the input having the influences on the output based on the significances of the influences. For example, the input is an image, and thus a heat map of the image can be generated based on the significance of the influences of difference input parts on the output. The degree of prominence of an input part in the heat map is in direct proportion to its influence on the output.

As a result, after the output is obtained by the model based on the input, the user can also know the influences of different input parts on the output. Therefore, it may be understood to a certain extent that, which part of the input is used for performing the prediction (i.e., obtaining the output) by the model, thereby improving the credibility of the output of the machine learning model at the user level.

The above describes the basic flow of the method for model interpretation according to the disclosure in detail with reference to FIG. 6. Below, implementation principles for determining the influences of different input parts will be illustrated by examples.

In some embodiments of the disclosure, for each input part, a predetermined number of transformation operations can be performed on the input part. A predetermined number of new inputs obtained after performing the predetermined number of transformation operations on the input part can be input into the machine learning model to obtain new outputs. The number of times that the new output is the same as the output is counted. The significance of an influence of an input part on the output is inversely proportional to the number of times counted. That is, the more times the new output is the same as the output, the smaller the influence of the input part on the output (can also be understood as significance).

In some embodiments of the disclosure, for each input part, a predetermined number of transformation operations can be performed on the input part to obtain multiple new inputs, and a confidence level of each new output can be obtained. The confidence level refers to the confidence of the output from the machine learning model based on the input, that is, a probability value or an output weight of the output from the machine learning model based on the input. Differences between the original output and the predetermined number of new outputs corresponding to each input part can be obtained by taking the confidence level into consideration. The influences of different input parts on the output can be determined based on the differences. As an example, for a binary classification problem, outputs representing two categories can be represented as (+1) and (-1) respectively, and the product of an output and the confidence level (i.e., the probability value) can be used as an output result of the comparison. In the case that a predetermined number of new outputs are obtained, products corresponding to each output can be summed up to obtain an overall output result representing the new output based on a sum or an average value of the products. The overall output result may be compared with the original output to obtain the difference therebetween. Therefore, for each input part, the influence of the input part on the output can be determined based on the overall difference between the original output and the corresponding predetermined number of new outputs. The significance of the influence of the input part on the output is proportional to the value of the difference. That is, the greater the difference, the greater the influence.

### [Model Update]

After the model is launched to offer a prediction service, the model can receive feedback information of the prediction service from users and the model can be updated based on the feedback information.

As an example of the disclosure, the feedback information may include an updated label for correcting a predicted label provided by the prediction service. New training samples may be generated based on the updated labels of data corresponding to the predicted labels and the data corresponding to the predicted labels. The model may be updated with the new training samples. The update label can be provided by the user.

As an example of the disclosure, the feedback information may also include only rejection information for rejecting to accept the predicted label provided by the prediction service. In this case, the labelling result of the data corresponding to the rejected predicted label can be obtained again. New training samples may be generated based on the data and the re-obtained labelling results. The model may be updated with the new training samples.

That is, in using the prediction service of the model, the user can accept the prediction of the model or not accept the prediction of the model. In a case that the user does not accept the prediction of the model, the rejection information can be fed back as the feedback information, or the predicted label can be corrected to obtain an updated label as the feedback information. The model can be updated based on the user's feedback information, such that the model can be closer and closer to the user's expectations.

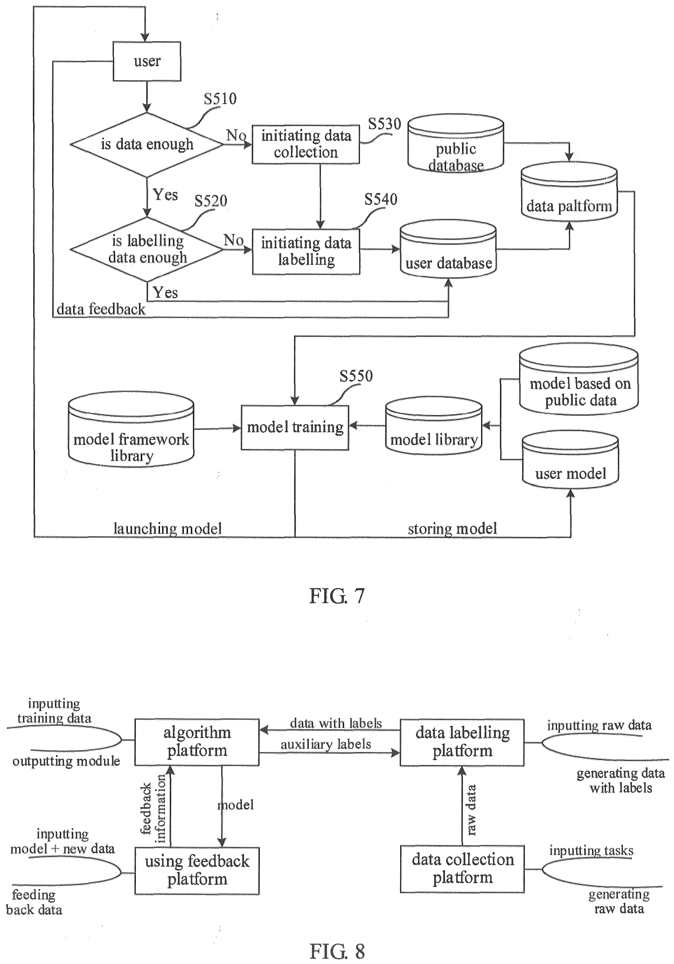

FIG. 7 is a schematic diagram illustrating model training according to example embodiments of the disclosure.

As illustrated in FIG. 7, a block S510 can be performed first to determine whether data uploaded by the user is sufficient. For example, a data upload interface can be provided for the user, and the user can upload data through the interface. In the case where the user does not upload data or the amount of the data uploaded the user is lower than a predetermined threshold, it can be considered that the user's data is insufficient.

In the case where the user's data is insufficient, a block S530 may be executed to initiate data collection. The process of collecting data can be seen in FIG. 2 above, which is not be repeated here. After the data collection is completed, a block S540 can be executed to initiate data labelling. The data labelling process can be performed manually. For example, labelling tasks corresponding to the predicted target of the model training can be issued based on the predicted target, and the manual labelling can be performed to obtain the labelling results of the collected data. The labelling result of the data may be stored in the user database in association with the data.

In the case where the data uploaded by the user is sufficient, a block S520 can be executed to further determine whether labelling data in the data uploaded by the user is sufficient. In the case where the labelling data is sufficient, the data can be directly stored in the user database. In the case where the labelling data is insufficient, a block S540 can be executed to initiate the data labelling. The data labelling process can be referred to the above description, which is not be repeated here.

Therefore, for a user with no data or insufficient data, when they expect to use the machine learning technology to train a model to solve a specific problem, the data for the model training can be automatically collected. In some embodiments, the data may be automatically labelled.

As illustrated in FIG. 7, the data platform can maintain a public database and a user database. The data in the public database can be completely open to the external. The labelled data and the labelling results can be stored in the user database in association. The external use permission of the user database is related to the user's settings. In the case where the user sets the user database to be open to the external, the data in the user database can be used by other users. Therefore, when performing the block S530 of initiating the data collection, not only the data from the public database, but also the data from user databases of other users open to the external can be obtained.

After the data and labelling results are obtained, a block S550 can be executed to perform the model training. During the model training, a model framework matching the user's needs can be selected from a model framework library, and the model training can be performed based on the selected model framework. The model framework library can include multiple model frameworks respectively corresponding to specific task types. In addition, during the model training, a previously trained model matching the user's predicted target can be selected from a model library, and the selected model may be updated using the data and labelling results to achieve the model training. The model library can include models based on public data and user models. The model based on public data may be a model trained based on public data, while the user model may be a model trained based on user data, which may be a model trained using the method of the disclosure. The external use permission of the model based on public data can be open to the external, and the external use permission of the user model can be related to the user's settings. While selecting a model from the model library, the model may be selected from only the models that are open to the external.

After the model training is completed, the generated model can be saved as a user model. The external use permission of the model is related to the user's settings. A user-oriented application programming interface can be generated in response to a model application request from the user, such that the user can obtain the prediction service provided by the model through the application programming interface.

As illustrated in FIG. 7, when the user uses the prediction service, whether the user accept the prediction of the model or not may be returned. The data and the predicted label corresponding to the prediction accepted by the user can be stored to the user database. For the data corresponding to the prediction that is not accepted by the user, the data labelling can be re-initiated. After the data is re-labelled, the labelled data will be provided to the model for learning. Therefore, the model is closer and closer to the user expectations.

FIG. 8 is a schematic diagram illustrating a platform architecture of a full-process automatic learning platform according to the disclosure.

As illustrated in FIG. 8, the disclosure can be implemented as a full-process automatic learning platform. This service platform can be composed of a data collection platform, a data labelling platform, an algorithm platform, and a use feedback platform.

The data collection platform can provide a user with a data upload interface, and receive data uploaded by the user for the model training. In addition, the data collection platform can also provide the user with the data collection service. In a case where user's data for the model training is insufficient, the user's data collection needs can be acquired and data collection operations can be performed. For example, the user can define tasks, such as "request to collect pictures containing various fruits". The data collection platform can collect raw data meeting the user's needs based on the tasks entered by the user. The collected raw data may be data without labelling results. The data collection process can be referred to descriptions of FIG. 2 above, which is not repeated here.

The data labelling platform can provide the user with data labelling services. A general workflow of the data labelling platform may include the following. The data labelling platform can receive data labelling requests from a user or the data collection platform, package the data to be labelled into labelling tasks, and send them to one or more labelers who can perform manual labelling. The labelers perform the manual labelling on the data to be labelled. The data labelling platform can organize the manual labelling results, and save or send the organized labelling results.

The algorithm platform can receive the data and the labelling results sent by the data labelling platform, and use the data and the labelling results to automatically perform the model training. The model training process may refer to the description of the block S130 in FIG. 1, which is not repeated here.

It should be noted, while the data labelling platform presents the object to be labelled to the labeler, the auxiliary prompt information may be also presented to the labeler, such that the labeler can manually label the object to be labelled based on the auxiliary prompt information. The auxiliary prompt information may be generated by the labelling platform or generated by the algorithm platform and sent to the labelling platform.

While using the prediction service, the user can send whether to accept the prediction of the model or not back to the feedback platform. The data corresponding to the prediction that the user does not accept can be fed back to the data labelling platform. After the data is labelled again, the labelled data may be provided to the model for learning. Therefore, the model may be closer and closer to the user's expectations.

Taking an image-oriented data as an example, the platform according to the disclosure can be an automated and intelligent full-process computer vision platform that can be integrated with many functions, such as data collection, data labelling, automatic model generation, automatic model launch, model update, and model interpretation. Based on the disclosure, the user can quickly obtain the online service capability of the model by simply selecting the problem to be solved, such that the use threshold for obtaining the model prediction service may be lowered to a level without requiring the user to know algorithm knowledge.

In detail, the user can upload the labelled image data, or upload the unlabelled image data which is to be labelled through the platform. In addition, the user can also publish the collection tasks and the labelling tasks to obtain three forms of labelled data to obtain the data represented by x and the learning object represented by y (i.e., the labelling result). The platform can automatically fit the relationship between x and y, and output the model obtained by this fitting online. The user can upload the input image x through various methods such as http request and grpc request. The service may return the prediction y on x.

In conclusion, the disclosure can automatically select the optimal model framework and parameters by defining the task type. The user can obtain the labelling results and data by defining the tasks on the platform, regardless of whether the user has labels or not or even has data or not. The platform can evaluate the training result model through interpretation and automatically launch the model as web services for using by users.

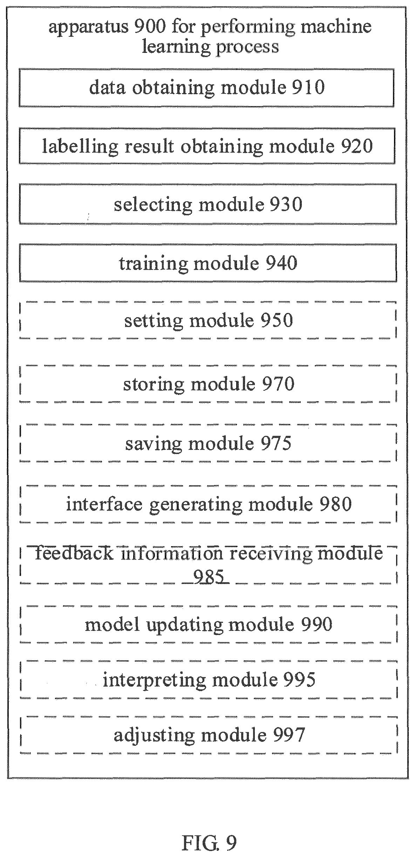

FIG. 9 is a block diagram illustrating an apparatus for performing a machine learning process according to example embodiments of the disclosure. Functional modules of the apparatus for implementing the labelling can be implemented by hardware, software, or a combination of hardware and software for implementing the principles of the disclosure. Those skilled in the art can understand that the functional modules described in FIG. 9 can be combined or divided into submodules to realize the principle of the above-mentioned disclosure. Therefore, the description herein may support any possible combination, or division, or further limitation of the functional modules described herein. The following is a brief description of the functional modules of the apparatus for executing the machine learning process and operations that can be performed by each functional module. The details can refer to the above related descriptions, which is not repeated here.

As illustrated in FIG. 9, the apparatus 900 for performing a machine learning process may include a data obtaining module 910, a labelling result obtaining module 920, a selecting module 930, and a training module 940.

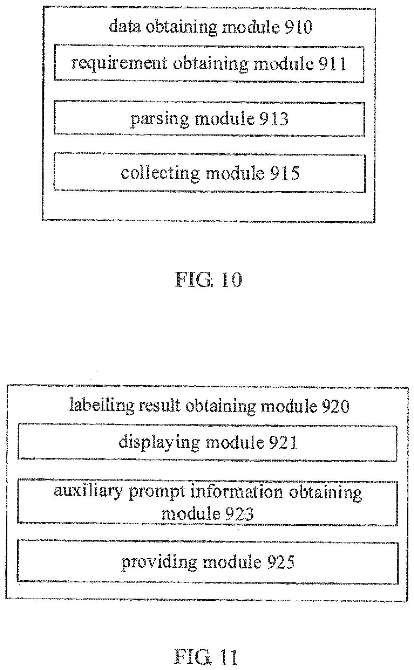

The data obtaining module 910 is configured to obtain data. In some embodiments, as illustrated FIG. 10, the data obtaining module 910 may include a requirement obtaining module 911, a parsing module 913, and a collecting module 915. The requirement obtaining module 911 may be configured to obtain a data collection requirement from a user. The parsing module 913 can be configured to parse the data collection requirement to determine keywords contained in data suitable for being collected. The collecting module 915 can be configured to collect data with keywords.

The labelling result obtaining module 920 is configured to obtain the labelling result of the data. The labelling result obtaining module 920 can be configured to issue a labelling task corresponding to a predicted target of the model training based on the predicted target to obtain the labelling result of the data.

In some embodiments, as illustrated in FIG. 11, the labelling result obtaining module 920 may include a displaying module 921, an auxiliary prompt information obtaining module 923, and a providing module 925. The displaying module 921 is configured to display an object to be labelled to a labeler. The auxiliary prompt information obtaining module 923 is configured to obtain auxiliary prompt information for prompting a labelling conclusion of the object to be labelled. The providing module 925 is configured to provide the auxiliary prompt information to the labeler, to allow the labeler to perform manual labelling on the object to be labelled based on the auxiliary prompt information.

The selecting module 930 is configured to select a model framework matching the user's requirement and/or a model matching the user's predicted target. The model framework is a framework for training a model based on a machine learning algorithm. The selecting module 930 can be configured to select the model framework from model frameworks corresponding to a task type matching the user's requirement, and/or, the selecting module 930 can be configured to select the model matching the user's predicted target from previously trained models.

In some embodiments, as illustrated in FIG. 9, the apparatus 900 may also include a setting module 950 enclosed by a dashed box. The setting module 950 is configured to preset one or more task types and set one or more model frameworks for each task type.

As an example of the disclosure, the previously trained models may be obtained by performing the model training based on corresponding model frameworks. The selecting module 930 may be configured to select models suitable for the user's predicted target from the previously trained models, and further select a model trained based on the model framework corresponding to the task type matching the user's requirement from the selected models. In some embodiments, the selecting module 930 may be configured to select models trained based on the model framework corresponding to the task type matching the user's requirement from the previously trained models, and further select the model suitable for the user's predicted target from the selected models.

The training module 940 is configured to perform model training using data and labelling results based on the selected model framework and/or the selected model. In the disclosure, the training module 940 can be configured to perform the model training using the data and the labelling results based on the selected model framework. In some embodiments, the training module 940 may be further configured to update the selected model using the data and the labelling results. In some embodiments, the training module 940 can be further configured to update the selected model using the data and the labelling result in the case where the model matching the user's predicted target is obtained, and perform the model training using the data and the labelling result based on the selected model framework in the case where the model matching the user's predicted target is not obtained.

In some embodiments, as illustrated in FIG. 9, the apparatus 900 may also include a storing module 970 and/or a saving module 975 enclosed by a dashed box. The storing module 970 is configured to store the data and the labelling result in a user database corresponding to the user. The saving module 975 is configured to save the trained model. An external use permission of the trained model and/or the user database is related to the user's settings. As an example, in the case where the user database is set to be open to the external, the data in the user database can be used by other users, and/or in the case where the model is set to be open to the external, the model can be used by other users.

In some embodiments, as illustrated in FIG. 9, the apparatus 900 may also include an interface generating module 980 enclosed by a dashed box. The interface generating module 980 is configured to generate a user-oriented application programming interface in response to a model application request from the user after the model training is completed, such that the user can obtain a prediction service provided by the model through the application programming interface.

In some embodiments, as shown in FIG. 9, the apparatus 900 may further include a feedback information receiving module 985 and a model updating module 990 enclosed by dashed boxes. The feedback information receiving module 985 is configured to receive user feedback information of the prediction service. The model updating module 990 is configured to update the model based on the feedback information. As an example of the disclosure, the feedback information may include an updated label for correcting a predicted label provided by the prediction service. The model updating module 990 may be configured to generate new training samples based on the updated label of data corresponding to the predicted label and the data corresponding to the predicted label, and update the model using the new training samples. As another example of the disclosure, the feedback information may also include rejection information of rejecting the predicted label provided by the prediction service. The model updating module 990 may be configured to obtain again the labelling result of the data corresponding to the rejected predicted label, generate the new training samples based on the data and the re-obtained labelling result, and update the model using the new training samples.

In some embodiments, as illustrated in FIG. 9, the apparatus 900 may also include an interpreting module 995 enclosed by a dashed box. The interpreting module 995 is configured to interpret influences of different input parts in the input on the output after the output is obtained by the user using the model to predict the input.

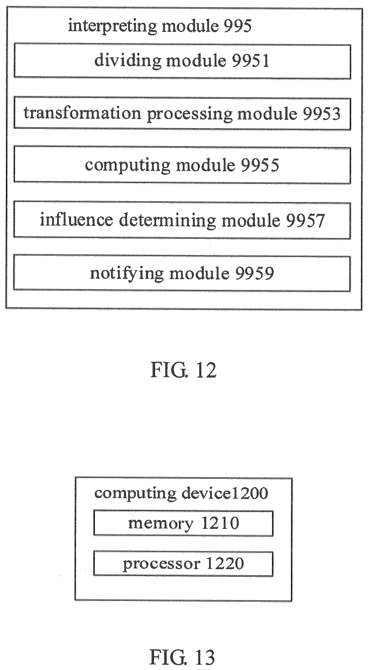

In some embodiments, as illustrated in FIG. 12, the interpreting module 995 may include a dividing module 9951, a transformation processing module 9953, a computing module 9955, an influence determining module 9957, and a notifying module 9959.

The dividing module 9951 is configured to divide the input into multiple input parts. The transformation processing module 9953 is configured to, for each input part, perform a transformation operation on only the input part while keeping other input parts unchanged, to obtain a new input. The computing module 9955 is configured to input each new input again into the model for computing, to obtain a new output of the model based on the new input. The influence determining module 9957 is configured to determine the influences of different input parts on the output based on a difference between the new output and the output. The notifying module 9959 is configured to notify the user of the influences of different input parts on the output in an understandable form.

In some embodiments, as illustrated in FIG. 9, the apparatus 900 may also include an adjusting module 997 enclosed by a dashed box. The adjusting module 997 is configured to dynamically adjust resources used by the model to provide the prediction service based on the amount of prediction requests initiated by the user through the application programming interface.

FIG. 13 is a schematic structural diagram illustrating a computing device for implementing the above method for processing data according to embodiments of the disclosure.

As illustrated in FIG. 13, the computing device 1200 includes a memory 1210 and a processor 1220.

The processor 1220 may be a multi-core processor, or may include multiple processors. In some embodiments, the processor 1220 may include a general-purpose main processor and one or more special co-processors, such as a graphics processing unit (GPU), a digital signal processor (DSP), and so on. In some embodiments, the processor 1220 may be implemented by customized circuits, for example, an application specific integrated circuit (ASIC) or a field programmable gate array (FPGA).

The memory 1210 may include various types of storage units, such as system memory, read only memory (ROM), and permanent storage. The ROM may store static data or instructions required by the processor 1220 or other modules of the computer. The permanent storage device may be a readable and writable storage device. The permanent storage device may be a non-volatile storage device that does not lose stored instructions and data even after the computer is powered off. In some embodiments, the permanent storage device adopts a large-capacity storage device (such as a magnetic or optical disk, flash memory). In other embodiments, the permanent storage device may be a removable storage device (for example, a floppy disk, an optical drive). The system memory can be a readable and writable storage device or a volatile readable and writable storage device, such as dynamic random-access memory. The system memory can store some or all of the instructions and data needed by the processor at runtime. In addition, the memory 1210 may include any combination of computer-readable storage media, including various types of semiconductor memory chips (DRAM, SRAM, SDRAM, flash memory, programmable read-only memory), and magnetic disks and/or optical disks may also be used. In some embodiments, the memory 1210 may include a removable storage device that can be read and/or written, such as a compact disc (CD), a read-only digital versatile disc (for example, DVD-ROM, dual-layer DVD-ROM), read-only Blu-ray discs, ultra-density discs, flash memory cards (such as SD cards, min SD cards, Micro-SD cards, etc.), magnetic floppy disks, etc. The computer-readable storage medium does not include carrier waves and instantaneous electronic signals transmitted in wireless or wired.

The memory 1210 has processable codes stored thereon, and when the processable codes are processed by the processor 1220, the processor 1220 can be caused to execute the method described above.

As an example, the processor may be implemented as a computing device, and the memory may be implemented as at least one storage device storing instructions. Correspondingly, the computing device may be implemented as a system including at least one computing device and at least one storage device storing instructions. When the instructions are executed by the at least one computing device, the at least one computing device is caused to perform a method for performing a machine learning process.

The method, apparatus, and computing device for performing a machine learning process according to the disclosure have been described in detail above with reference to the accompanying drawings.

In addition, the method according to the disclosure can also be implemented as a computer program or computer program product. The computer program or the computer program product includes computer program code instructions for executing the method of the disclosure. For example, the method can be implemented as a computer-readable storage medium having instructions stored thereon. When the instructions are executed by at least one computing device, the at least one computing device is caused to perform the above method of the disclosure.

In some embodiments, the disclosure can also be implemented as a non-transitory machine-readable storage medium (or computer-readable storage medium, or machine-readable storage medium) having executable codes (or computer programs, or computer instruction codes) stored thereon. When the executable codes (or computer programs, or computer instruction codes) are executed by a processor of the electronic device (or a computing device, a server), the processor is caused to execute the above method according to the disclosure.

Those skilled in the art will also understand that various exemplary logic blocks, modules, circuits, and algorithm steps described in conjunction with the disclosure herein can be implemented as electronic hardware, computer software, or a combination of both.

The flowcharts and block diagrams in the drawings show possible implementation architectures, functions, and operations of the system and method according to multiple embodiments of the disclosure. In this regard, each block in the flowchart or block diagram can represent a module, program segment, or part of the code. The module, program segment, or part of the code contains one or more executable instructions for realizing the specified logical function. It should also be noted, in some alternative implementations, the functions marked in the block may be performed in a different order than shown in the drawings. For example, two consecutive blocks can actually be executed in parallel, or they can sometimes be executed in the reverse order, depending on the functions involved. It should also be noted, each block in the block diagram and/or flowchart, and the combination of the blocks in the block diagram and/or flowchart, can be implemented by a dedicated hardware-based system that performs the specified functions or operations, or can be realized by a combination of dedicated hardware and computer instructions.

Embodiments of the disclosure have been described above, the above description is exemplary, not exhaustive, and is not used to limit disclosed embodiments. Without departing from the scope and spirit of the described embodiments, many modifications and changes are obvious to those of ordinary skill in the art. For example, for the technical solutions of the disclosure, corresponding machine learning models may be mentioned on different occasions. These models may be the same, similar or different. For the meaning and limitations of each model, those skilled in the art can understand them according to the specification. The choice of terms used herein is intended to best explain the principles, practical applications, or improvements to the technology in the market for each embodiment, or to enable other ordinary skilled in the art to understand the various embodiments disclosed herein.

## Claims

1. A method for performing machine learning process, executable by at least one computing device, the method comprising:
obtaining data;
obtaining a labelling result of the data; and
selecting at least one of a model framework meeting a requirement of a user and a model meeting a predicted target of the user, and performing model training using the data and the labelling result of the data based on at least one of the model framework and the model,
wherein the model framework is a framework used for performing the model training based on a machine learning algorithm.

2. The method of claim 1, wherein selecting at least one of the model framework meeting the requirement of the user and the model meeting the predicted target of the user comprises at least one of:
selecting a model framework from model frameworks corresponding to a task type meeting the requirement of the user; and
selecting the model meeting the predicted target of the user from previously trained models.

3. The method of claim 2, further comprising:
presetting one or more task types, and setting one or more model frameworks for each task type.

4. The method of claim 2, wherein the previously trained models are obtained by performing the model training based on corresponding model frameworks, and selecting the model meeting the predicted target of the user from previously trained models comprises:
searching for models suitable for the predicted target of the user from the previously trained models and selecting the model trained based on the model framework corresponding to the task type meeting the requirement of the user from selected models; or
selecting the model trained based on the model framework corresponding to the task type meeting the requirement of the user from the previously trained modes, and searching for the model suitable for the predicted target of the user from the selected models.

5. The method of claim 1, wherein performing the model training using the data and the labelling result of the data comprises:
performing the model training using the data and the labelling result of the data based on the selected model framework; or
updating the selected model using the data and the labelling result of the data based on the selected model; or
in a case where the model meeting the predicted target of the user is obtained, updating the obtained model using the data and the labelling result of the data, and in a case where the model meeting the predicted target of the user is not obtained, performing the model training using the data and the labelling result of the data based on the selected model framework.

6. The method of claim 1, wherein obtaining the data comprises:
obtaining a data collection requirement from the user;
parsing the data collection requirement to determine a keyword contained in data suitable for being collected; and
collecting the data containing the keyword.

7. The method of claim 1, wherein obtaining the labelling result of the data comprises:
publishing a labelling task corresponding to the predicted target of the model training based on the predicted target to obtain the labelling result of the data.

8. The method of claim 7, wherein obtaining the labelling result of the data further comprises:
presenting an object to be labelled to a labeler;
obtaining auxiliary prompt information for prompting a labelling conclusion of the object to be labelled; and
providing the auxiliary prompt information to the labeler, to allow the labeler to perform manual labelling on the object to be labelled based on the auxiliary prompt information.

9. The method of claim 1, further comprising:
storing the data and the labelling result into a user database corresponding to the user;
wherein an external use permission of the user database is related to user settings.

10. The method of claim 9, wherein in a case that the user database is set to be open to external, data in the user database is useable by another user.

11. The method of claim 1, further comprising:
saving a trained model obtained by the model training,
wherein an external use permission of the trained model is related to user settings.

12. The method of claim 11, wherein in a case that the trained model is set to be open to external, the trained model is useable by another user.

13. The method of claim 1, further comprising:
generating a user-oriented application programming interface in response to a model application request from the user after the model training is completed, to allow the user to obtain a prediction service provided by the model through the application programming interface.

14. The method of claim 13, further comprising:
receiving feedback information on the prediction service from the user; and
updating the model based on the feedback information.

15. The method of claim 14, wherein the feedback information comprises an updated label for correcting a predicted label provided by the prediction service,
wherein updating the model comprises: generating new training samples based on the updated label of data corresponding to the predicted label and the data corresponding to the predicted label, and updating the model using the new training samples.

16. The method of claim 14, wherein the feedback information comprises rejection information of rejecting a predicted label provided by the prediction service,
wherein updating the model comprises: re-obtaining a labelling label of data corresponding to the rejected predicted label, generating new training samples based on the data and the re-obtained labelling result, and updating the model using the new training samples.

17. The method of claim 13, further comprising:
interpreting influences of different input parts of an input on an output after the output is obtained by predicting the input by the user using the model.

18. The method of claim 17, wherein interpreting the influences of different input parts of the input on the output comprises:
dividing the input into a plurality of input parts;
for each input part, performing a transformation operation on the input part while keeping other input parts unchanged to obtain a new input;
inputting each new input to the model to obtain a new output from the model based on the new input;
determining the influences of different input parts on the output based on differences between the new outputs and the output; and
notifying the user of the influences of different input parts on the output in an understandable form.

19. The method of claim 13, further comprising:
dynamically adjusting resources required by the prediction service provided by the service based on an amount of prediction requirements issued by the user through the application programming interface.

20. A system comprising at least one computing device and at least one storage device having instructions stored thereon, wherein when the instructions are executed by the at least one computing device, the at least one computing device is caused to perform machine learning process to perform operations of:
obtaining data;
obtaining a labelling result of the data; and
selecting at least one of a model framework meeting a requirement of a user and a model meeting a predicted target of the user, wherein the model framework is a framework used for performing model training based on a machine learning algorithm; and
performing the model training using the data and the labelling result of the data based on at least one of the model framework and the model.

21. The apparatus of claim 20, wherein selecting at least one of the model framework meeting the requirement of the user and the model meeting the predicted target of the user comprises at least one of:
selecting a model framework from model frameworks corresponding to a task type meeting the requirement of the user; and
selecting the model meeting the predicted target of the user from previously trained models.

22. The apparatus of claim 21, wherein when the instructions are executed by the at least one computing device, the at least one computing device is caused to perform operations of:
presetting one or more task types, and setting one or more model frameworks for each task type.

23. The apparatus of claim 21, wherein the previously trained models are obtained by performing the model training based on corresponding model frameworks, and selecting the model meeting the predicted target of the user from previously trained models comprises:
searching for models suitable for the predicted target of the user from the previously trained models and selecting the model trained based on the model framework corresponding to the task type meeting the requirement of the user from selected models; or
selecting the model trained based on the model framework corresponding to the task type meeting the requirement of the user from the previously trained modes, and searching for the model suitable for the predicted target of the user from the selected models.

24. The apparatus of claim 20, wherein performing the model training using the data and the labelling result of the data comprises:
performing the model training by a training module using the data and the labelling result of the data based on the selected model framework; or
updating the selected model by the training module using the data and the labelling result of the data based on the selected model; or
in a case where the model meeting the predicted target of the user is obtained, updating the obtained model by the training module using the data and the labelling result of the data, and in a case where the model meeting the predicted target of the user is not obtained, performing the model training using the data and the labelling result of the data based on the selected model framework.

25. The apparatus of claim 20, wherein obtaining the data comprises:
obtaining a data collection requirement from the user;
parsing the data collection requirement to determine a keyword contained in data suitable for being collected; and
collecting the data containing the keyword.

26. The apparatus of claim 20, wherein obtaining the labelling result of the data comprises:
publishing a labelling task corresponding to the predicted target of the model training based on the predicted target to obtain the labelling result of the data.

27. The apparatus of claim 26, wherein obtaining the labelling result of the data further comprises:
presenting an object to be labelled to a labeler;
obtaining auxiliary prompt information for prompting a labelling conclusion of the object to be labelled; and
providing the auxiliary prompt information to the labeler, to allow the labeler to perform manual labelling on the object to be labelled based on the auxiliary prompt information.

28. The apparatus of claim 20, wherein when the instructions are executed by the at least one computing device, the at least one computing device is caused to perform operations of:
storing the data and the labelling result into a user database corresponding to the user; wherein an external use permission of the user database is related to user settings.

29. The apparatus of claim 28, wherein in a case that the user database is set to be open to external, data in the user database is useable by another user.

30. The apparatus of claim 30, wherein when the instructions are executed by the at least one computing device, the at least one computing device is caused to perform operations of:
saving a trained model obtained by the model training, wherein an external use permission of the trained model is related to user settings.

31. The apparatus of claim 30, wherein in a case that the trained model is set to be open to external, the trained model is useable by another user.

32. The apparatus of claim 20, wherein when the instructions are executed by the at least one computing device, the at least one computing device is caused to perform operations of:
generating a user-oriented application programming interface in response to a model application request from the user after the model training is completed, to allow the user to obtain a prediction service provided by the model through the application programming interface.

33. The apparatus of claim 32, wherein when the instructions are executed by the at least one computing device, the at least one computing device is caused to perform operations of:
receiving feedback information on the prediction service from the user; and
updating the model based on the feedback information.

34. The apparatus of claim 33, wherein the feedback information comprises an updated label for correcting a predicted label provided by the prediction service,
wherein updating the model comprises: generating new training samples based on the updated label of data corresponding to the predicted label and the data corresponding to the predicted label, and updating the model using the new training samples.

35. The apparatus of claim 33, wherein the feedback information comprises rejection information of rejecting a predicted label provided by the prediction service,
wherein updating the model comprises: re-obtaining a labelling label of data corresponding to the rejected predicted label, generating new training samples based on the data and the re-obtained labelling result, and updating the model using the new training samples.

36. The apparatus of claim 32, wherein when the instructions are executed by the at least one computing device, the at least one computing device is caused to perform operations of:
interpreting influences of different input parts of an input on an output after the output is obtained by predicting the input by the user using the model.

37. The apparatus of claim 36, wherein interpreting the influences of different input parts of the input on the output comprises:
dividing the input into a plurality of input parts;
for each input part, performing a transformation operation on the input part while keeping other input parts unchanged to obtain a new input;
inputting each new input to the model to obtain a new output from the model based on the new input;
determining the influences of different input parts on the output based on differences between the new outputs and the output; and
notifying the user of the influences of different input parts on the output in an understandable form.

38. The apparatus of claim 32, wherein when the instructions are executed by the at least one computing device, the at least one computing device is caused to perform operations of:
dynamically adjusting resources required by the prediction service provided by the service based on an amount of prediction requirements issued by the user through the application programming interface.

39. An apparatus for performing machine learning process, comprising:
a data obtaining module, configured to obtain data;
a labelling result obtaining module, configured to obtain a labelling result of the data;
a selecting module, configured to select at least one of a model framework meeting a requirement of a user and a model meeting a predicted target of the user, wherein the model framework is a framework used for performing model training based on a machine learning algorithm; and
a training module, configured to perform the model training using the data and the labelling result of the data based on at least one of the model framework and the model.

40. A computer readable storage medium, having instructions stored thereon, wherein when the instructions are executed by at least one computing device, the at least one computing device is caused to perform a method of any one of claims 1 to 19.
